# EUROPÄISCHE PATENTSCHRIFT

(11) **EP 3 075 056 B1**
(45) Veröffentlichungstag und Bekanntmachung des Hinweises auf die Patenterteilung: **17.06.2020**
(21) Anmeldenummer: 14796781.4
(22) Anmeldetag: 14.11.2014
(51) Int. Cl.: H02J 3/38, H02M 1/12, H02M 7/487

(54) **VERFAHREN ZUM BETREIBEN EINES WECHSELRICHTERS UND WECHSELRICHTER MIT EINEM SCHALTER ZWISCHEN EINEM MITTELPUNKT EINES GLEICHSPANNUNGSZWISCHENKREISES UND EINEM ANSCHLUSS FÜR EINEN NULLLEITER EINES WECHSELSTROMNETZES**
METHOD FOR OPERATING AN INVERTER AND INVERTER COMPRISING A SWITCH BETWEEN A CENTER POINT OF A DC LINK AND A CONNECTION FOR A NEUTRAL CONDUCTOR OF AN AC GRID
PROCÉDÉ POUR FAIRE FONCTIONNER UN ONDULEUR ET ONDULEUR COMPORTANT UN COMMUTATEUR PLACÉ ENTRE UN POINT MÉDIAN D'UN CIRCUIT INTERMÉDIAIRE À TENSION CONTINUE ET UNE BORNE DESTINÉE À UN CONDUCTEUR NEUTRE D'UN RÉSEAU À COURANT ALTERNATIF

(30) Priorität: 25.11.2013 DE 102013113000
(43) Veröffentlichungstag der Anmeldung: 05.10.2016
(73) Patentinhaber: SMA Solar Technology AG, 34266 Niestetal (DE)
(72) Erfinder: BREMICKER, Sven, 36211 Alheim (DE)
(74) Vertreter: Lahnor, Peter
(86) Internationale Anmeldenummer: PCT/EP2014/074601
(87) Internationale Veröffentlichungsnummer: WO 2015/074965

(56) Entgegenhaltungen:
- EP-A1- 2 802 054
- DE-A1-102008 063 201
- DE-A1-102012 020 036
- US-A1- 2012 068 655
- K.H. Edelmoser: "Common Mode Problematic of Solar Inverter Systems", Proceedings of the 11th WSEAS International Conference on CIRCUITS, Agios Nikolaos, Crete Island, Greece, July 23-25, 2007, 23. Juli 2007 (2007-07-23), Seiten 131-135, XP055079107, Gefunden im Internet: URL:http://www.wseas.us/e-library/conferen ces/2007cscc/papers/561-360.pdf [gefunden am 2013-09-13]

## Beschreibung

### TECHNISCHES GEBIET DER ERFINDUNG

Die Erfindung bezieht sich auf ein Verfahren zum Betreiben eines eingangsseitig an einen Generator und ausgangsseitig an ein mehrphasiges Wechselstromnetz angeschlossenen Wechselrichters mit einem Schalter zwischen einem Mittelpunkt eines Gleichspannungszwischenkreises und einem Anschluss für einen Nullleiter eines Wechselstromnetzes sowie auf einen entsprechenden Wechselrichter.

Der Nullleiter eines Wechselstromnetzes wird auch als sein Neutralleiter bezeichnet.

### STAND DER TECHNIK

Ein eingangsseitig an einen Generator und ausgangsseitig an ein mehrphasiges Wechselstromnetz angeschlossener Wechselrichter mit einem Schalter zwischen einem Mittelpunkt eines Gleichspannungszwischenkreises und einem Anschluss eines Nullleiters eines Wechselstromnetzes ist aus der EP 2 608 375 A2 bekannt. Immer wenn mit diesem bekannten Wechselrichter elektrische Energie von einem an den Gleichspannungszwischenkreis angeschlossenen Photovoltaikgenerator in das Wechselstromnetz eingespeist wird, ist der Schalter geschlossen. Bei dem Schalter handelt es sich um einen elektromechanischen Schalter, der mit einem weiteren elektromechanischen Schalter in Reihe geschaltet ist.

Derartige Reihenschaltungen von zwei elektromechanischen Schaltern sind auch zwischen einer Wechselrichterbrücke des Wechselrichters und den Anschlüssen für die Phasenleiter des Wechselstromnetzes vorgesehen. Um die elektromechanischen Schalter zwischen dem Mittelpunkt des Gleichspannungszwischenkreises und dem Anschluss für den Nullleiter auf ihre Trennfunktion hin zu überprüfen, können diese einzeln geschlossen und geöffnet werden. In der EP 2 608 375 A2 wird auch für die Prüfung der elektromechanischen Schalter kein Zustand des Wechselrichters beschrieben, in dem alle elektromechanischen Schalter zwischen der Wechselrichterbrücke und den Anschlüssen für die Phasenleiter des Wechselstromnetzes geschlossen sind, während einer oder beide elektromagnetischen Schalter zwischen dem Mittelpunkt des Gleichspannungszwischenkreises und dem Anschluss für den Nullleiter geöffnet ist bzw. sind.

Aus der EP 2 107 672 A1 ist ein eingangsseitig an einen Generator und ausgangsseitig an ein mehrphasiges Wechselstromnetz angeschlossener dreiphasiger Wechselrichter ohne Verbindung zwischen dem Nullleiter eines Wechselstromnetzes und dem Mittelpunkt eines Gleichspannungszwischenkreises bekannt. Dieser Wechselrichter weist einen hohen Wirkungsgrad auf, und er ist bei einer niedrigen Zwischenkreisspannung in dem Gleichspannungszwischenkreis funktionsfähig. Es stellt sich jedoch heraus, dass ein bei diesem Wechselrichter von einem an den Gleichspannungszwischenkreis angeschlossenen Generator fließender Ableitstrom vergleichsweise groß ist. Zudem ist keine unsymmetrische Einspeisung von elektrischer Energie in die einzelnen Phasen des Wechselstromnetzes möglich.

Bei dem aus der EP 2 107 672 A1 bekannten dreiphasigen Wechselrichter ist der Mittelpunkt des Gleichspannungszwischenkreises über Filterkondensatoren mit Leitungen verbunden, die von den Mittelpunkten der Halbbrücken der Wechselrichterbrücke des Wechselrichters zu den Phasenleitern des Netzes führen und in denen Filterinduktivitäten angeordnet sind. Die Halbbrücken sind als Multi-Level-Schaltungen ausgeführt, insbesondere als Drei-Level-Schaltungen. Dabei sind die Mittelpunkte der Wechselrichterbrücken jeweils über einen bidirektionalen Schalter aus zwei mit einander entgegen gesetzten Sperrrichtungen in Reihe geschalteten Halbleiterschaltern mit dem Mittelpunkt des Gleichspannungszwischenkreises verbunden.

Aus der EP 2 375 552 A1 ist ein Verfahren zur Betriebsführung eines eingangsseitig an einen Generator und ausgangsseitig an ein mehrphasiges Wechselstromnetz angeschlossenen Wechselrichters bekannt, wie er in der EP 2 107 672 A2 beschrieben ist. Bei diesem bekannten Verfahren wird der im Betrieb des Wechselrichters auftretende Ableitstrom durch Erhöhen der Zwischenkreisspannung seines eingangsseitigen Gleichspannungszwischenkreises reduziert. Dies ist in dem Bereich niedriger Zwischenkreisspannungen möglich, den ein Wechselrichter ohne Verbindung zwischen dem Mittelpunkt seines Gleichspannungszwischenkreises und dem Nullleiter eines ausgangsseitig angeschlossenen Wechselstromnetzes ermöglicht. In diesem Spannungsbereich zwischen dem Scheitelwert der Phasenleiter zu Phasenleiter Spannung des Wechselstromnetzes und dem doppelten Scheitelwert der Phasenleiter zu Nullleiter Spannung des Wechselstromnetzes werden die Schalter der Wechselrichterbrücke des Wechselrichters so angesteuert, dass die in die Phasenleiter eingespeisten Wechselströme durch sogenannte Übermodulation geformt werden. Diese Übermodulation hat einen Ableitstrom zur Folge, der mit zunehmendem Ausmaß der Übermodulation bei abnehmender Zwischenkreisspannung ansteigt. Entsprechend kann der Ableitstrom, der weiterhin von der Ableitkapazität eines an den Gleichspannungszwischenkreis angeschlossenen Generators abhängt, durch Erhöhen der Zwischenkreisspannung reduziert werden.

Aus der EP 2 367 272 A2 ist ein eingangsseitig an einen Generator angeschlossener Wechselrichter mit einer dreiphasigen Brückenschaltung bekannt, deren ausgangsseitige Phasenleiter mit einem dreiphasigen Wechselspannungsnetz verbindbar sind. Der Wechselrichter weist keine Verbindung zum Neutralleiter des Wechselspannungsnetzes auf. Mit den Phasenleitern ist jeweils ein Kondensator verbunden, und die Kondensatoren weisen einen gemeinsamen Verknüpfungspunkt auf. Ein eingangsseitiger Zwischenkreis des Wechselrichters ist mit einer seriellen Anordnung von Symmetrierkondensatoren verbunden, die über einen Dämpfungswiderstand mit dem Verknüpfungspunkt verbunden ist.

Aus der US 2013/0229837 A1 ist ein transformatorloser Stromrichter bekannt, der als aktives Filter zur Verbesserung der Netzqualität eines Wechselstromnetzes betrieben wird. Der Stromrichter weist eine dreiphasige Stromrichterbrücke auf, die AC-seitig an das Wechselstromnetz und DC-seitig an einen Gleichspannungszwischenkreis angeschlossen ist. Zwischen einem Mittelpunkt des Gleichspannungszwischenkreises und einem Anschluss für einen Nullleiter des mehrphasigen Wechselstromnetzes ist ein ansteuerbarer Schalter vorgesehen. Der Schalter ist mit zwei separaten Drosselmodulen in zwei Zweigen des Nullleiters zu dem Mittelpunkt des eigentlichen Gleichspannungszwischenkreises einerseits und zu dem Mittelpunkt eines Hilfskondensatormoduls andererseits kombiniert. Mit dem Schalter ist der Stromrichter konfigurierbar, und zwar entweder in eine 3p3w-Konfiguration mit offenem Schalter oder eine 3p4w-Konfiguration mit geschlossenem Schalter. Dabei gehört das Hilfskondensatormodul, das die Kapazität des Gleichspannungszwischenkreises erhöht, um Rippelströme zu unterdrücken, zu der 3p4w-Struktur.

Aus der US 2012/0068655 A1 ist ein eingangsseitig an ein dreiphasiges Wechselstromnetz und ausgangsseitig an einen dreiphasigen Motor angeschlossener Umrichter bekannt, der einen Wechselrichter und einen geteilten Gleichspannungszwischenkreis aufweist. An die drei Phasenleitungen des Motors ist eine Neutralpunkterkennungsschaltung angeschlossen, deren Ausgang über eine Bypass-Schaltung mit dem Mittelpunkt des geteilten Gleichspannungszwischenkreises verbunden ist. Die Bypass-Schaltung weist zwei Schalter auf, über die zwei unterschiedliche Kapazitäten mit einem Widerstand in Reihe zwischen den Ausgang der Neutralpunkterkennungsschaltung und den Mittelpunkt des geteilten Gleichspannungszwischenkreises geschaltet werden können, um Resonanzen in einem Filter am Ausgang des Umrichters zu unterdrücken.

Die DE 10 2012 020036 A1 zeigt eine eingangsseitig an einen Generator und ausgangsseitig an ein mehrphasiges Wechselstromnetz angeschlossene Schaltungsanordnung, mit einem eine mehrphasige Wechselrichterbrücke aufweisenden transformatorlosen Wechselrichter. In einer Ausführungsform ist dabei ein Neutralleiter mit einem Mittelpunkt eines eingangsseitigen geteilten Gleichspannungszwischenkreises verbunden.

In der erst nach dem Prioritätsdatum der vorliegenden Anmeldung veröffentlichten EP 2 802 054 A1 ist ein eingangsseitig an einen Photovoltaikgenerator und ausgangsseitig an ein geerdetes mehrphasiges Wechselstromnetz angeschlossener und eine mehrphasige Wechselrichterbrücke aufweisender transformatorloser Wechselrichter offenbart. Zwischen einem Mittelpunkt eines eingangsseitigen Gleichspannungszwischenkreises und einem über an Ausgangsleitungen angeschlossene Kapazitäten erzeugten virtuellen Neutralpunkt und/oder zwischen dem Mittelpunkt des eingangsseitigen Gleichspannungszwischenkreises und Erde sind jeweils Schalter vorgesehen, die beim Übergang von jeweils ersten Betriebsbedingungen zu zweiten Betriebsbedingungen, die sich von den jeweils ersten Betriebsbedingungen unterscheiden, geöffnet werden und bei einem Übergang von den jeweils zweiten Betriebsbedingungen zu den jeweils ersten Betriebsbedingungen geschlossen werden.

### AUFGABE DER ERFINDUNG

Der Erfindung liegt die Aufgabe zugrunde, ein Verfahren zum Betreiben eines eingangsseitig an einen Generator und ausgangsseitig an ein mehrphasiges Wechselstromnetz angeschlossenen Wechselrichters und einen entsprechenden Wechselrichter bereitzustellen, mit denen bei einem eingangsseitig angeschlossenen Generator mit großer Ableitkapazität eine größere Anzahl von Betriebsbedingungen optimal abdeckbar ist.

### LÖSUNG

Die Aufgabe der Erfindung wird durch ein Verfahren mit den Merkmalen des unabhängigen Patentanspruchs 1 und durch einen transformatorlosen Wechselrichter mit den Merkmalen des unabhängigen Patentanspruchs 4 gelöst. Bevorzugte Ausführungsformen des Verfahrens und des Wechselrichters sind in den abhängigen Patentansprüchen definiert.

### BESCHREIBUNG DER ERFINDUNG

Bei einem erfindungsgemäßen Verfahren zum Betreiben eines eingangsseitig an einen Generator und ausgangsseitig an ein mehrphasiges Wechselstromnetz angeschlossenen und eine mehrphasige Wechselrichterbrücke aufweisenden transformatorlosen Wechselrichters mit einem Schalter zwischen einem Mittelpunkt eines eingangsseitigen Gleichspannungszwischenkreises und einem Anschluss für einen Nullleiter des mehrphasigen Wechselstromnetzes wird dann, wenn erste Betriebsbedingungen vorliegen, elektrische Leistung bei geschlossenem Schalter mit der Wechselrichterbrücke aus dem Gleichspannungszwischenkreis in das Wechselstromnetz eingespeist, während dann, wenn zweite Betriebsbedingungen vorliegen, die sich von den ersten Betriebsbedingungen unterscheiden, elektrische Leistung bei geöffnetem Schalter mit der Wechselrichterbrücke aus dem Gleichspannungszwischenkreis in das Wechselstromnetz eingespeist wird. Bei dem erfindungsgemäßen Verfahren ist also die Verbindung des Mittelpunkts des eingangsseitigen Gleichspannungszwischenkreises mit dem Anschluss für den Nullleiter des mehrphasigen Wechselstromnetzes je nach den herrschenden Betriebsbedingungen unterbrochen bzw. hergestellt. So kann bei den herrschenden Betriebsbedingungen der Wirkungsgrad des Wechselrichters optimiert werden, ein ansteigender Ableitstrom minimiert werden, eine unsymmetrische Einspeisung in die Phasenleiter des Wechselstromnetzes realisiert werden und/oder eine niedrigere oder höhere Zwischenkreisspannung in dem Gleichspannungszwischenkreis optimal genutzt werden.

Es versteht sich, dass die Ausführung des erfindungsgemäßen Verfahrens sinnvollerweise voraussetzt, dass der Wechselrichter bei geöffnetem Schalter eine günstige effektive Schaltung für einen Wechselrichter ohne Verbindung des Mittelpunkts seines eingangsseitigen Gleichspannungszwischenkreises mit dem Nullleiter des Wechselstromnetzes aufweist, wobei der Mittelpunkt des Gleichspannungszwischenkreises beispielsweise über Kondensatoren mit den Phasenleitern des Wechselstromnetzes verbunden ist. Eine solche Verbindung über Kondensatoren kann zusätzlich zwischen den Phasenleitern des Wechselstromnetzes und dem Nullleiter des Wechselstromnetzes bestehen. So lange der Schalter jedoch geöffnet ist, bleiben der Mittelpunkt des eingangsseitigen Gleichspannungszwischenkreises und der Nullleiter galvanisch getrennt. Bei geschlossenem Schalter ergibt sich dann eine effektive Schaltung, die für einen Wechselrichter günstig ist, bei dem der Mittelpunkt des eingangsseitigen Gleichspannungszwischenkreises mit dem Nullleiter des ausgangsseitig angeschlossenen Wechselstromnetzes verbunden ist.

Die zweiten Betriebsbedingungen, unter denen elektrische Leistung bei geöffnetem Schalter mit der Wechselrichterbrücke aus dem Gleichspannungszwischenkreis in das Wechselstromnetz eingespeist wird, können dadurch gekennzeichnet sein, dass ein an dem Wechselrichter gemessener Differenzstrom oder Ableitstrom bei geöffnetem Schalter einen ersten Stromgrenzwert einhält. Anders gesagt, setzt die Größe des Differenzstroms bzw. des Ableitstroms keinen Grund, den Schalter zu schließen. Dabei ist mit dem Differenzstrom der nicht durch einen Fehler bedingte, sondern der auch im fehlerfreien Betrieb des Wechselrichters auftretende Differenzstrom gemeint, dessen wesentlicher Bestandteil der kapazitive Ableitstrom von dem an den Gleichspannungszwischenkreis angeschlossenen Generator ist.

Umgekehrt kann ein an dem Wechselrichter bei geschlossenem Schalter gemessener Differenzstrom oder Ableitstrom, der einen zweiten Stromgrenzwert einhält, ein Signal sein, den geschlossenen Schalter zu öffnen. Dabei kann der zweite Stromgrenzwert zur Berücksichtigung des bei geöffnetem Schalter prinzipiell höheren betriebsbedingten Differenzstroms und zur Vermeidung häufiger Schaltvorgänge des Schalters deutlich niedriger als der erste Stromgrenzwert sein.

Prinzipiell dasselbe Kriterium wie bei den Stromgrenzwerten kommt zur Anwendung, wenn eine für den an den Gleichspannungszwischenkreis angeschlossenen Generator ermittelte Ableitkapazität einen Kapazitätsgrenzwert einhält. Die Größe dieser Ableitkapazität bestimmt den bei einem vorgegebenen Betrieb des Wechselrichters auftretenden Ableitstrom und damit auch den Differenzstrom. So lange die Ableitkapazität den Kapazitätsgrenzwert einhält, besteht die Möglichkeit, den ersten bzw. zweiten Stromgrenzwert bei geöffnetem bzw. geschlossenem Schalter einzuhalten. Ein Verfahren zum Erfassen der Ableitkapazität eines Generators ist beispielsweise aus der WO 2011/121056 A1 bekannt.

Ein hinreichendes Kriterium für das Vorliegen der zweiten Betriebsbedingungen ist es weiterhin, dass eine Zwischenkreisspannung des Gleichspannungszwischenkreises einen doppelten Scheitelwert einer Phasenleiter zu Nullleiter Spannung des Wechselstromnetzes nicht erreicht.

Hingegen ist es ein notwendiges Kriterium für das Vorliegen der zweiten Betriebsbedingungen, dass eine symmetrische Einspeisung in alle Phasenleiter des Wechselstromnetzes gewollt ist.

Umgekehrt verhält es sich mit den ersten Betriebsbedingungen. Für deren Vorliegen ist es ein hinreichendes Kriterium, dass eine asymmetrische Einspeisung in die Phasenleiter des Wechselstromnetzes gewollt ist. Weiter liegen die ersten Betriebsbedingungen dann vor, wenn ein an dem Wechselrichter gemessener Differenzstrom oder Ableitstrom bei geöffnetem Schalter den ersten Stromgrenzwert oder bei geschlossenem Schalter den zweiten Stromgrenzwert überschreitet. Das analoge, auf die Ableitkapazität bezogene Kriterium ist hier, dass eine für den an den Gleichspannungszwischenkreis angeschlossenen Generator bestimmte Ableitkapazität den Kapazitätsgrenzwert überschreitet.

Wenn bei dem erfindungsgemäßen Verfahren ein Übergang von den zweiten Betriebsbedingungen zu den ersten Betriebsbedingungen festgestellt wird, wird der Schalter geschlossen und die Ansteuerung der Wechselrichterbrücke des Wechselrichters gegebenenfalls entsprechend angepasst. Umgekehrt verhält es sich bei einem Übergang von den ersten Betriebsbedingungen zu den zweiten Betriebsbedingungen, wobei dann gegebenenfalls die Ansteuerung der Wechselrichterbrücke des Wechselrichters wieder an den Betrieb mit geöffnetem Schalter angepasst wird.

Bei geöffnetem Schalter kann ein an dem Wechselrichter gemessener Differenzstrom oder Ableitstrom reduziert oder vergleichsweise klein gehalten werden, indem eine Zwischenkreisspannung des Gleichspannungszwischenkreises von oberhalb eines Scheitelwertes einer Phasenleiter zu Phasenleiter Spannung bis über einen doppelten Scheitelwert einer Phasenleiter zu Nullleiter Spannung des Wechselstromnetzes angehobenen wird. Hiervon kann zur Begrenzung des Differenzstroms zunächst Gebrauch gemacht werden, bevor der Schalter geschlossen wird, weil dieses Schließen mit Nachteilen bei dem Wirkungsgrad des Wechselrichters verbunden ist. Der Scheitelwert der Phasenleiter zu Phasenleiter Spannung des Wechselstromnetzes definiert den Mindestwert für die Zwischenkreisspannung. Darunter kann auch bei geöffnetem Schalter kein unverzerrter Wechselstrom mehr ausgegeben werden. Über dem Scheitelwert der Phasenleiter zu Phasenleiter Spannung des Wechselstromnetzes kann ein unverzerrter Wechselstrom bei geöffnetem Schalter durch Übermodulation ausgegeben werden. Die Übermodulation ist bis zum doppelten Scheitelwert der Phasenleiter zu Nullleiter Spannung des Wechselstromnetzes erforderlich und führt bei gleichbleibender Ableitkapazität des an den Gleichspannungszwischenkreis angeschlossenen Generator zu einer Erhöhung des Ableitstroms, die mit steigender Zwischenkreisspannung zurückgeht. Wie die Wechselrichterbrücke des Wechselrichters bei Übermodulation anzusteuern ist, geht beispielsweise aus der EP 2 375 552 A1 hervor.

Ein erfindungsgemäßer transformatorloser Wechselrichter mit einem eingangsseitigen Gleichspannungszwischenkreis, einer mehrphasigen Wechselrichterbrücke, Anschlüssen für ein mehrphasiges Wechselstromnetz und einem Schalter zwischen einem Mittelpunkt des eingangsseitigen Gleichspannungszwischenkreises und dem Anschluss für einen Nullleiter des mehrphasigen Wechselstromnetzes weist eine Steuerung auf, die die Wechselrichterbrücke und den Schalter gemäß dem erfindungsgemäßen Verfahren ansteuert.

Zum Erkennen der ersten und zweiten Betriebsbedingungen kann eine einen Differenzstromsensor umfassende Messeinrichtung zum Messen des Differenzstroms an dem Wechselrichter oder eines Ableitstroms von dem eingangsseitig an den Wechselrichter angeschlossenen Generator an die Steuerung angeschlossen sein.

Die Wechselrichterbrücke kann eine Multi-Level-Schaltung umfassen. Insbesondere kann es sich um eine Drei-Level-Schaltung vom Typ NPC (Neutral Point Clamped) handeln. Ganz insbesondere kann es sich um eine BSNPC (Bidirectional Switch Neutral Point Clamped) Schaltung mit bidirektionalen Schaltern zwischen dem Mittelpunkt des Gleichspannungszwischenkreises und den Mittelpunkten ihrer Halbbrücken handeln. Diese bidirektionalen Schalter können als Paare von in Reihe oder parallel geschalteten Halbleiterschaltern mit einander entgegengesetzten Sperrrichtungen ausgebildet sein.

Der Schalter zwischen dem Mittelpunkt des Gleichspannungszwischenkreises und dem Anschluss für den Nullleiter kann in einer von dem Mittelpunkt des Gleichspannungszwischenkreises zu dem Anschluss für den Nullleiter führenden Leitung an einem Punkt angeordnet sein, der zwischen ersten und zweiten mit der Leitung verbundenen Kondensatoren liegt. Dabei sind die ersten und zweiten Kondensatoren mit ihren anderen Anschlüssen mit Leitungen verbunden, die von der Wechselrichterbrücke zu den Anschlüssen für die Phasenleiter des Wechselstromnetzes führen. Die ersten und die zweiten Kondensatoren können Teile eines ersten und eines zweiten Filters des Wechselrichters sein, die jeweils zusätzliche Induktivitäten in den Leitungen zu den Anschlüssen für die Phasenleiter des Wechselstromnetzes umfassen.

Der Schalter zwischen dem Mittelpunkt des Gleichspannungszwischenkreises und dem Nullleiter des Wechselstromnetzes kann Teil eines Relais zum Zuschalten des Wechselrichters zu dem Wechselstromnetz sein. Dieses Relais weist dann weitere Schalter in den Leitungen auf, die von der Wechselrichterbrücke zu den Anschlüssen für die Phasenleiter des Wechselstromnetzes führen. Abweichend von einem normalen Relais mit synchron geschalteten einzelnen Schaltern in den einzelnen Leitungen muss der Schalter in der Leitung zu dem Nullleiter des Wechselstromnetzes jedoch separat schaltbar sein. Das Relais kann auch wie sonst vielfach üblich zwei in Reihe geschaltete elektromechanische Schalter in jeder Leitung aufweisen.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere der relativen Anordnung und Wirkverbindung mehrerer Bauteile - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand eines Ausführungsbeispiels unter Bezugnahme auf die beigefügte Zeichnung weiter erläutert und beschrieben.

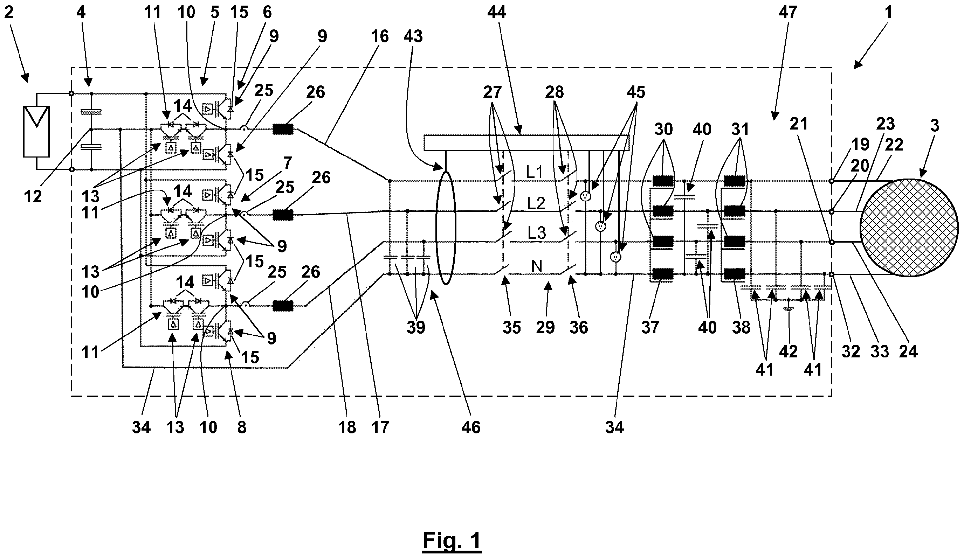

- **Fig.** 1: zeigt den prinzipiellen Aufbau eines erfindungsgemäßen Wechselrichters.

### FIGURENBESCHREIBUNG

**Fig.** 1 zeigt einen erfindungsgemäßen Wechselrichter 1, an den eingangsseitig ein Photovoltaikgenerator 2 und ausgangsseitig ein dreiphasiges Wechselstromnetz 3 angeschlossen ist.

Der Photovoltaikgenerator 2, der ein Beispiel für einen Generator mit ausgeprägter Ableitkapazität nach Erde ist, lädt einen geteilten eingangsseitigen Gleichspannungszwischenkreis 4 des Wechselrichters 1 auf, an den eine dreiphasige Wechselrichterbrücke 5 angeschlossen ist. Die drei Halbbrücken 6 bis 8 der Wechselrichterbrücke 5 sind jeweils als Drei-Level-Schaltungen vom BSNPC-Typ ausgeführt. Dazu weisen sie neben Schaltern 9, die jeweils zwischen den Mittelpunkt 10 und einen der beiden äußeren Pole des Gleichspannungszwischenkreises 4 geschaltet sind, einen bidirektionalen Schalter 11 zwischen dem Mittelpunkt 10 und einem Mittelpunkt 12 des Gleichspannungszwischenkreises 4 auf. Die bidirektionalen Schalter 11 sind dabei jeweils aus einem Paar von Halbleiterschaltern 13 mit entgegengesetzten Sperrrichtungen und antiparallelen Dioden 14 ausgebildet. Auch die Schalter 9 sind als Halbleiterschalter ausgebildet und weisen Sperrrichtungen und antiparallele Dioden 15 in üblicher Ausrichtung auf. Von den Mittelpunkten 10 jeder Halbbrücke 6 bis 8 führt eine Leitung 16 bis 18 zu einem von drei Anschlüssen 19 bis 21 für einen der drei Phasenleiter 22 bis 24 des Wechselstromnetzes 3. Dabei sind in diesen Leitungen 16 bis 18 Stromsensoren 25, Induktivitäten 26, zwei in Reihe geschaltete elektromechanische Schalter 27 und 28 eines Relais 29 sowie weitere Induktivitäten 30 und 31 angeordnet. Ein zusätzlicher Anschluss 32 für einen Nullleiter 33 des Wechselstromnetzes 3 ist über eine Leitung 34 mit dem Mittelpunkt 12 des Gleichspannungszwischenkreises 4 verbunden. Dabei sind in dieser Leitung 34 von dem Mittelpunkt 12 aus gesehen, zwei in Reihe geschaltete elektromechanische Schalter 35 und 36 des Relais 29 und mit den Induktivitäten 30 und 31 gekoppelte Induktivitäten 37 und 38 vorgesehen. Die Schalter 35 und 36 zählen zwar zu dem Relais 29, sind aber unabhängig von den Schaltern 27 und 28 schaltbar. Von dem Mittelpunkt 12 aus ist die Leitung 34 vor den Schaltern 35 und 36 über Kondensatoren 39 mit den Leitungen 16 bis 18 verbunden. Weitere Kondensatoren 40 sind hinter den Schaltern 35 und 36 und zwischen den Induktivitäten 37 und 38 jeweils mit der Leitung 34 und einer der Leitungen 16 bis 18 verbunden. Zusätzliche Kondensatoren 41 sind zwischen allen Leitungen 16 bis 18 und 34 und Erde 42 vorgesehen. Die Induktivitäten 26 und die Filterkondensatoren 39 bilden ein erstes Filter 46 des Wechselrichters 1 aus, das als Sinusfilter ausgelegt sein kann. Die Induktivitäten 30, 31, 37 sowie 38 und die Kondensatoren 40 und 41 bilden ein zweites Filter 47 des Wechselrichters 1 aus, das als weiteres Sinusfilter und/oder als Netzfilter des Wechselrichters 1 ausgelegt sein kann. Zwischen dem ersten Filter 46 und dem zweiten Filter 47 sind die Schalter 35 und 36 in der Leitung 34 vorgesehen.

Der Wechselrichter 1 wird in einem ersten Betriebsmodus mit geöffneten Schaltern 35 und 36 betrieben, d. h. ohne galvanische Verbindung zwischen dem Mittelpunkt 12 und dem Nullleiter 33. Wenn jedoch ein Differenzstrom an dem Wechselrichter 1 oder ein Ableitstrom von dem Photovoltaikgenerator 2, der mit Hilfe eines Differenzstromsensors 43 erfasst wird, zu groß wird oder wenn unter Kontrolle der Stromsensoren 25 asymmetrisch in die einzelnen Phasenleiter 22 bis 24 eingespeist werden soll, werden die Schalter 35 und 36 von einer Steuerung 44 des Wechselrichters 1 geschlossen. Der Differenzstromsensor 43 ist hier auf der AC-Seite des Wechselrichters 1 angeordnet. Er kann aber auch auf der DC-Seite des Wechselrichters angeordnet werden. Die Steuerung 44 erfasst über Messeinrichtungen 45 auch die Spannungen zwischen den Leitungen 16 bis 18 und der Leitung 34, d. h. zwischen den einzelnen Phasenleitern 22 bis 24 und dem Nullleiter 33. Indirekt erfasst die Steuerung 44 damit auch die Spannungen zwischen den einzelnen Phasenleitern 22 bis 24. Sie schließt das Relais 29 , d. h. hier zumindest die Schalter 27 und 28, grundsätzlich erst dann, wenn die von dem Wechselrichter 1 an den Mittelpunkten 10 der Halbbrücken 6 bis 8 ausgegebenen Spannungen mit den mit den Messeinrichtungen 45 gemessenen Spannungen des Wechselstromnetzes 3 synchronisiert sind. Abhängig von der Stellung der Schalter 35 und 36 steuert die Steuerung 44 auch die Schalter 9 und 11 der Wechselrichterbrücke 5 über in Fig. 1 nicht gezeigte Steuerleitungen an. Im offenen Zustand der Schalter 35 und 36 geschieht dies beispielsweise nach dem aus der EP 2 375 552 A1 bekannten Verfahren. Im geschlossenen Zustand der Schalter 35 und 36, kann die Ansteuerung so gewählt werden, dass entweder eine symmetrische oder asymmetrische Einspeisung in die Phasenleiter 22 bis 24 des Wechselstromnetzes 3 realisiert wird; im offen Zustand ist nur eine symmetrische Einspeisung sinnvoll.

### BEZUGSZEICHENLISTE

- 1: Wechselrichter
- 2: Photovoltaikgenerator
- 3: Wechselstromnetz
- 4: Gleichspannungszwischenkreis
- 5: Wechselrichterbrücke
- 6: Halbbrücke
- 7: Halbbrücke
- 8: Halbbrücke
- 9: Schalter
- 10: Mittelpunkt
- 11: bidirektionaler Schalter
- 12: Mittelpunkt
- 13: Halbleiterschalter
- 14: antiparallele Diode
- 15: antiparallele Diode
- 16: Leitung
- 17: Leitung
- 18: Leitung
- 19: Anschluss
- 20: Anschluss
- 21: Anschluss
- 22: Phasenleiter
- 23: Phasenleiter
- 24: Phasenleiter
- 25: Stromsensor
- 26: Filterinduktivität
- 27: elektromechanischer Schalter
- 28: elektromechanischer Schalter
- 29: Relais
- 30: Induktivität
- 31: Induktivität
- 32: Anschluss
- 33: Nullleiter
- 34: Leitung
- 35: elektromechanischer Schalter
- 36: elektromechanischer Schalter
- 37: Induktivität
- 38: Induktivität
- 39: Kondensator
- 40: Kondensator
- 41: Kondensator
- 42: Erde
- 43: Differenzstromsensor
- 44: Steuerung
- 45: Messeinrichtung
- 46: Filter
- 47: Filter

## Patentansprüche

1. Verfahren zum Betreiben eines eingangsseitig an einen Generator und ausgangsseitig an ein mehrphasiges Wechselstromnetz (3) angeschlossenen und eine mehrphasige Wechselrichterbrücke (5) aufweisenden transformatorlosen Wechselrichters (1) mit einem Schalter (35, 36) zwischen einem Mittelpunkt (12) eines eingangsseitigen Gleichspannungszwischenkreises (4) und einem Anschluss (32) für einen Nullleiter (33) des mehrphasigen Wechselstromnetzes (3), wobei dann, wenn erste Betriebsbedingungen vorliegen, elektrische Leistung bei geschlossenem Schalter (35, 36) mit der Wechselrichterbrücke (5) aus dem Gleichspannungszwischenkreis (4) in das Wechselstromnetz (3) eingespeist wird, wobei bei einem Übergang von den ersten Betriebsbedingungen zu zweiten Betriebsbedingungen, die sich von den ersten Betriebsbedingungen unterscheiden, der Schalter (35, 36) geöffnet wird, wobei bei einem Übergang von den zweiten Betriebsbedingungen zu den ersten Betriebsbedingungen der Schalter (35, 36) geschlossen wird, und wobei dann, wenn die zweiten Betriebsbedingungen vorliegen, elektrische Leistung bei geöffnetem Schalter (35, 36) mit der Wechselrichterbrücke (5) aus dem Gleichspannungszwischenkreis (4) in das Wechselstromnetz (3) eingespeist wird, wobei bei den zweiten Betriebsbedingungen eine symmetrische Einspeisung in die Phasenleiter (22 bis 24) des Wechselstromnetzes (3) gewollt wird,
**dadurch gekennzeichnet, dass** die zweiten Betriebsbedingungen zusätzlich mindestens eine der folgenden Betriebsbedingungen umfassen:
- ein an dem Wechselrichter (1) gemessener Differenzstrom oder Ableitstrom hält bei geöffnetem Schalter (35, 36) einen ersten Stromgrenzwert ein,
- ein an dem Wechselrichter (1) gemessener Differenzstrom oder Ableitstrom hält bei geschlossenem Schalter (35, 36) einen zweiten Stromgrenzwert ein,
- eine für den an den Gleichspannungszwischenkreis (4) angeschlossenen Generator (2) ermittelte Ableitkapazität hält einen Kapazitätsgrenzwert ein,
- eine Zwischenkreisspannung des Gleichspannungszwischenkreises (4) erreicht nicht einen doppelten Scheitelwert einer Phasenleiter zu Nullleiter Spannung des Wechselstromnetzes.

2. Verfahren nach Anspruch 1, **dadurch gekennzeichnet, dass** die ersten Betriebsbedingungen mindestens eine der folgenden Betriebsbedingungen umfassen:
- der an dem Wechselrichter (1) gemessene Differenzstrom oder Ableitstrom überschreitet bei geöffnetem Schalter (35, 36) den ersten Stromgrenzwert,
- der an dem Wechselrichter (1) gemessene Differenzstrom oder Ableitstrom überschreitet bei geschlossenem Schalter (35, 36) den zweiten Stromgrenzwert,
- die für den an den Gleichspannungszwischenkreis (4) angeschlossenen Generator (3) ermittelte Ableitkapazität überschreitet den Kapazitätsgrenzwert,
- es ist eine asymmetrische Einspeisung in die Phasenleiter (22 bis 24) des Wechselstromnetzes (3) gewollt.

3. Verfahren nach einem der vorhergehenden Ansprüche, **dadurch gekennzeichnet, dass** ein an dem Wechselrichter (1) gemessener Differenzstrom oder Ableitstrom bei geöffnetem Schalter (35, 36) reduziert wird, indem eine Zwischenkreisspannung des Gleichspannungszwischenkreises (4) von oberhalb eines Scheitelwertes einer Phasenleiter zu Phasenleiter Spannung bis über einen doppelten Scheitelwert einer Phasenleiter zu Nullleiter Spannung des Wechselstromnetzes (3) angehobenen wird.

4. Transformatorloser Wechselrichter (1) mit einem eingangsseitigen Gleichspannungszwischenkreis (4), einer mehrphasigen Wechselrichterbrücke (5), eingangsseitigen Anschlüssen für einen Generator, ausgangsseitigen Anschlüssen (19 bis 21, 32) für ein mehrphasiges Wechselstromnetz (3), einem Schalter (35, 36) zwischen einem Mittelpunkt (12) des eingangsseitigen Gleichspannungszwischenkreises (4) und dem Anschluss (32) für einen Nullleiter (33) des mehrphasigen Wechselstromnetzes (3) und mit einer Steuerung (44), die die Wechselrichterbrücke (5) und den Schalter (35, 36) gemäß dem Verfahren nach einem der vorhergehenden Ansprüche ansteuert.

5. Wechselrichter (1) nach Anspruch 4, **dadurch gekennzeichnet, dass** eine einen Differenzstromsensor (43) umfassende Messeinrichtung zum Messen eines Differenzstroms an dem Wechselrichter (1) oder eines Ableitstroms von dem eingangsseitig an den Wechselrichter (1) angeschlossenen Generator (3) an die Steuerung (44) angeschlossen ist.

6. Wechselrichter (1) nach Anspruch 4 oder 5, **dadurch gekennzeichnet, dass** die Wechselrichterbrücke (5) eine Multi-Level-Schaltung mit bidirektionalen Schaltern (11) zwischen dem Mittelpunkt (12) des Gleichspannungszwischenkreises und Mittelpunkten (10) ihrer Halbbrücken (6 bis 8) umfasst.

7. Wechselrichter (1) nach einem der Ansprüche 4 bis 6, **dadurch gekennzeichnet, dass** der Schalter (35, 36) in einer von dem Mittelpunkt (12) des Gleichspannungszwischenkreises (4) zu dem Anschluss (32) für den Nullleiter (33) führenden Leitung (34) an einem Punkt angeordnet ist, der zwischen ersten mit der Leitung (34) und Leitungen (16 bis 18), die von der Wechselrichterbrücke (5) zu den Anschlüssen (19 bis 21) für die Phasenleiter (22 bis 24) des Wechselstromnetzes (3) führen, verbundenen Kondensatoren (39) und zweiten mit der Leitung (34) und den Leitungen (16 bis 18) zu den Anschlüssen (19 bis 21) für die Phasenleiter (22 bis 24) verbundenen Kondensatoren (40) des Wechselrichters (1) liegt.

8. Wechselrichter (1) nach Anspruch 7, **dadurch gekennzeichnet, dass** ein weiterer Schalter (27, 28) in jeder Leitung (16 bis 18) vorgesehen ist, die von der Wechselrichterbrücke (5) zu den Anschlüssen (19 bis 21) für die Phasenleiter (22 bis 24) des Wechselstromnetzes (3) führt.

## Claims

1. A method of operating a transformerless inverter (1) connected on the input side to a generator and on the output side to a multiphase AC grid (3) and comprising a multi-phase inverter bridge (5) with a switch (35, 36) between a midpoint (12) of a DC intermediate circuit (4) on the input side and a terminal (32) for a neutral conductor (33) of the multiphase AC grid (3), wherein, when first operating conditions are present, electric power is fed from the DC intermediate circuit (4) into the AC grid (3) by the inverter bridge (5) at closed switch (35, 36), wherein at a transition from the first operating conditions to second operating conditions, different from the first operating conditions, the switch (35, 36) is opened, wherein at a transition from the second operating conditions to the first operating conditions the switch (35, 36) is closed, and wherein, when the second operating conditions are present, electric power is fed from the DC intermediate circuit (4) into the AC grid (3) by the inverter bridge (5) at open switch (35, 36), wherein in the case of the second operating conditions a symmetric feed into all phase conductors (22 to 24) of the AC grid (3) is intended, **characterized in that** the second operating conditions additionally comprise at least one of the following operating conditions:
- a residual current or leakage current measured at the inverter (1) maintains a first current limit at open switch (35, 36),
- a residual current or leakage current measured at the inverter (1) maintains a second current limit at closed switch (35, 36),
- a leakage capacitance determined for the generator (2) connected to the DC intermediate circuit (4) maintains a capacitance limit,
- an intermediate circuit voltage of the DC intermediate circuit (4) does not reach the double value of the peak phase-to-neutral line voltage of the AC grid (3).

2. The method according to claim 1, **characterized in that** the first operating conditions comprise at least one of the following operating conditions:
- the residual current or leakage current measured at the inverter (1) exceeds the first current limit at open switch (35, 36),
- the residual current or leakage current measured at the inverter (1) exceeds the second current limit at closed switch (35, 36),
- the leakage capacitance determined for the generator (2) connected to the DC intermediate circuit (4) exceeds the capacitance limit,
- an asymmetric feed into the phase conductors (22 to 24) of the AC grid (3) is intended.

3. The method according to any one of the preceding claims, **characterized in that** a residual current or leakage current measured at the inverter (1) is reduced at open switch (35, 36) by increasing an intermediate circuit voltage of the DC intermediate circuit (4) from above a peak phase-to-phase line voltage to above a double value of the peak phase-to-neutral line voltage of the AC grid (3).

4. A transformerless inverter (1) with a DC intermediate circuit (4) on the input side, a multiphase inverter bridge (5), input-side terminals for a generator, output-side terminals (19 to 21, 32) for a multiphase AC grid (3), a switch (35, 36) between a midpoint (12) of the input-side DC intermediate circuit (4) and the terminal (32) for a neutral conductor (33) of the multiphase AC grid (3) and with a controller (44) controlling the inverter bridge (5) and the switch (35, 36) in accordance with the method according to any one of the preceding claims.

5. An inverter (1) according to claim 4, **characterized in that** a measuring device for measuring a residual current at the inverter (1) or a leakage current of the generator (2) connected on the input side to the inverter (1) is connected to the controller (44), the measuring device comprising a residual current sensor (43).

6. The inverter (1) according to claim 4 or 5, **characterized in that** the inverter bridge (5) comprises a multi-level circuit with bidirectional switches (11) between the midpoint (12) of the DC intermediate circuit and midpoints (10) of the half-bridges (6 to 8) of the inverter bridge (5).

7. The inverter (1) according to any one of claims 4 to 6, **characterized in that** the switch (35, 36) is arranged in a line (34) connecting the midpoint (12) of the DC intermediate circuit (4) to the terminal (32) for the neutral conductor (33) at a point located between first capacitors (39) being connected to the line (34) and lines (16 to 18) leading from the inverter bridge (5) to terminals (19 to 21) for the phase conductors (22 to 24) of the AC grid (3) and second capacitors (40) of the inverter (1) that are connected to the line (34) and the lines (16 to 18) leading to the terminals (19 to 21) for the phase conductors (22 to 24).

8. The inverter (1) according to claim 7, **characterized in that** a further switch (27, 28) is provided in each line (16 to 18) leading from the inverter bridge (5) to the terminals (19 to 21) for the phase conductors (22 to 24) of the AC grid (3).

## Revendications

1. Procédé de fonctionnement d'un onduleur sans transformateur (1) qui est relié, côté entrée, à un générateur et, côté sortie, à un réseau à courant alternatif polyphasé (3) et qui comporte un pont d'onduleur polyphasé (5), avec un interrupteur (35, 36) entre un point central (12) d'un circuit intermédiaire à tension continue (4) côté entrée et une connexion (32) pour un conducteur neutre (33) du réseau à courant alternatif polyphasé (3), dans lequel, lorsque des premières conditions de fonctionnement sont présentes, l'énergie électrique est injectée dans le réseau à courant alternatif (3) à partir du circuit intermédiaire à tension continue (4) au moyen du pont inverseur (5) lorsque l'interrupteur (35, 36) est fermé, dans lequel, lors d'une transition des premières conditions de fonctionnement vers des secondes conditions de fonctionnement différentes des premières conditions de fonctionnement, l'interrupteur (35, 36) est ouvert, dans lequel, lors d'une transition des secondes conditions de fonctionnement vers les premières conditions de fonctionnement, l'interrupteur (35, 36) est fermé, et dans lequel ensuite, lorsque les deuxièmes conditions de fonctionnement sont présentes, l'énergie électrique est injectée dans le réseau à courant alternatif (3) à partir du circuit intermédiaire à tension continue (4) au moyen du pont onduleur (5) lorsque l'interrupteur (35, 36) est ouvert, une alimentation symétrique de tous les conducteurs de phase (22 à 24) du réseau à courant alternatif (3) étant souhaitée dans les deuxièmes conditions de fonctionnement,
**caractérisé en ce que** les deuxièmes conditions de fonctionnement comprennent en outre au moins une des conditions de fonctionnement suivantes
- un courant différentiel ou un courant de fuite mesuré au niveau de l'onduleur (1) maintient une première valeur limite de courant lorsque l'interrupteur (35, 36) est ouvert,
- un courant différentiel ou un courant de fuite mesuré au niveau de l'onduleur (1) maintient une deuxième valeur limite de courant lorsque l'interrupteur (35, 36) est fermé
- une capacité de fuite déterminée pour le générateur (2) connecté au circuit intermédiaire à tension continue (4) maintient une valeur limite de capacité,
- une tension de circuit intermédiaire du circuit intermédiaire à tension continue (4) n'atteint pas une double valeur de crête d'une tension de conducteur de phase à conducteur neutre du réseau à courant alternatif.

2. Procédé selon la revendication 1, **caractérisé en ce que** les premières conditions de fonctionnement comprennent au moins une des conditions de fonctionnement suivantes :
- le courant différentiel ou le courant de fuite mesuré au niveau de l'onduleur (1) dépasse la première valeur limite de courant lorsque l'interrupteur (35, 36) est ouvert
- le courant différentiel ou le courant de fuite mesuré au niveau de l'onduleur (1) dépasse la deuxième valeur limite de courant lorsque l'interrupteur (35, 36) est fermé
- la capacité de fuite déterminée pour le générateur (3) connecté au circuit intermédiaire à tension continue (4) dépasse la valeur limite de la capacité,
- une alimentation asymétrique dans les conducteurs de phase (22 à 24) du réseau à courant alternatif (3) est souhaitée.

3. Procédé selon l'une quelconque des revendications précédentes, **caractérisé en ce qu'**un courant différentiel ou un courant de fuite mesuré au niveau de l'onduleur (1) est réduit avec l'interrupteur (35, 36) ouvert en élevant une tension de circuit intermédiaire du circuit intermédiaire à tension continue (4) d'une valeur supérieure à une valeur de crête d'une tension de conducteur de phase à conducteur de phase à une valeur de crête double d'une tension de conducteur de phase à conducteur neutre du réseau à courant alternatif (3).

4. Onduleur sans transformateur (1) avec un circuit intermédiaire à tension continue (4) du côté de l'entrée, un pont d'onduleur polyphasé (5), des bornes du côté de l'entrée pour un générateur, des bornes (19 à 21, 32) du côté de la sortie pour un réseau à courant alternatif polyphasé (3), un interrupteur (35) entre un point central (12) du circuit intermédiaire à tension continue (4) côté entrée et la borne (32) pour un conducteur neutre (33) du réseau à courant alternatif polyphasé (3) et avec un contrôleur (44) qui commande le pont d'onduleur (5) et l'interrupteur (35, 36) selon le procédé selon l'une des revendications précédentes.

5. Onduleur (1) selon la revendication 4, **caractérisé en ce qu'**un dispositif de mesure comprenant un capteur de courant différentiel (43) pour mesurer un courant différentiel au niveau de l'onduleur (1) ou un courant de fuite du générateur (3) raccordé du côté de l'entrée à l'onduleur (1) est relié au contrôleur (44).

6. Onduleur (1) selon la revendication 4 ou 5, **caractérisé en ce que** le pont d'onduleur (5) comprend un circuit à plusieurs niveaux avec des commutateurs bidirectionnels (11) entre le centre (12) de le circuit intermédiaire à tension continue et les centres (10) de ses demi-ponts (6 à 8).

7. Onduleur (1) selon l'une quelconque des revendications 4 à 6, **caractérisé en ce que** l'interrupteur (35, 36) est disposé dans une ligne (34) menant du centre (12) du circuit intermédiaire à tension continue (4) à la borne (32) pour le conducteur neutre (33) en un point qui se trouve entre premiers condensateurs (39) connectés à la ligne (34) et aux lignes (16 à 18), qui mènent du pont de l'onduleur (5) aux connexions (19 à 21) pour les conducteurs de phase (22 à 24) du réseau à courant alternatif (3), et des seconds condensateurs (39) de l'onduleur (1) connectés à la ligne (34) et aux lignes (16 à 18) aux connexions (19 à 21) pour les conducteurs de phase (22 à 24).

8. Onduleur (1) selon la revendication 7, **caractérisé en ce qu'**un autre interrupteur (27, 28) est prévu dans chaque ligne (16 à 18) menant du pont d'onduleur (5) aux connexions (19 à 21) pour les conducteurs de phase (22 à 24) du réseau à courant alternatif (3).
